# EUROPÄISCHE PATENTANMELDUNG

(11) **EP 1 099 729 A2**
(43) Veröffentlichungstag der Anmeldung: **16.05.2001**
(21) Anmeldenummer: 00123857.5
(22) Anmeldetag: 02.11.2000
(51) Int. Cl.: C09B 67/22

(54) **Mischungen von Dispersions-Monoazofarbstoffen**

(30) Priorität: 12.11.1999 DE 19954398
(71) Anmelder: DyStar Textilfarben GmbH & Co. Deutschland KG, 60318 Frankfurt am Main (DE)
(72) Erfinder: Bühler, Ulrich, Dr., 63755 Alzenau (DE); Harfmann, Carsten, Dr., 51065 Köln (DE); Wanken, Klaus-Wilfried, 51381 Leverkusen (DE)

(57) **Zusammenfassung**

Die neuen Farbstoffmischungen enthaltend C.I. Disperse Orange 30 und wenigstens einen Monoazo-Farbstoff der allgemeinen Formel (1) 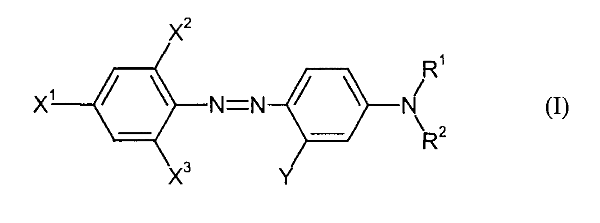 worin
R¹, R², X¹, X², X³ und Y die in der Beschreibung angegebene Bedeutung haben,
eignen sich hervorragend zum Färben und/oder Bedrucken von hydrophoben synthetischen Fasermaterialien oder von Mischungen mit natürlichen Fasermaterialien.

## Beschreibung

Die vorliegende Erfindung betrifft Mischungen von Dispersions-Monoazofarbstoffen mit C.I. Disperse Orange 30, Verfahren zu deren Herstellung, deren feste und flüssige Preparationen sowie deren Verwendung zum Färben und Bedrucken von hydrophoben synthetischen Fasermaterialien oder von Mischungen mit natürlichen Fasermaterialien.

Der Farbstoff C.I. Disperse Orange 30 entspricht der Formel

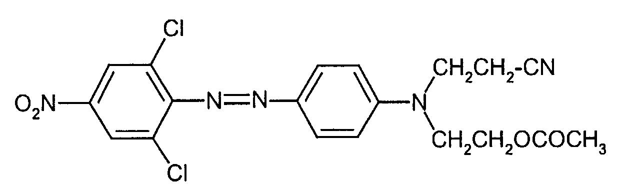

E.I. Disperse Orange 30 ist beispiesweise bekannt aus DE 1 219 608 und wird zum Färben und Bedrucken von synthetischen Fasermaterialen verwendet.

Die Herstellung von Flüssig- und insbesondere Pulverpräparationen von C.I. Disperse Orange 30 ist schwierig, da C.I. Disperse Orange 30 einen niedrigen Schmelzpunkt besitzt. Bei seiner Synthese ausgehend von 4-Nitroanilin und Anilin können viele Nebenprodukte entstehen, die den Schmelzpunkt und die Temperatur, bei der Sinterung beginnt, nach unten drücken. Nebenprodukte sind beispielsweise solche, die sich von 2-Chlor-4-nitranilin oder 4-Nitranilin einerseits und von N-Cyanethyl-N-hydroxyethylanilin, N,N-Bishydroxyethylanilin, N,N-Bisacetoxethylanilin, N-Cyanethylanilin, N,N-Biscyanethylanilin oder N-Cyanethylacetanilid andererseits ableiten. Durch Kombination der Diazo-Komponente oder der Kupplungs-Komponente von C.I. Disperse Orange 30, also von 2,6-Dichloranilin und N-Cyanethyl-N-acetoxethylanilin, mit diesen Nebenprodukten, kommt es zu einer Anzahl von bis zu 21 Azo-Nebenkomponenten im C.I. Disperse Orange 30.

Werden zur Herstellung von C.I. Disperse Orange 30 Presskuchen, die Diazo-Komponente und/oder die Kupplungs-Komponente zugekauft oder wird gar der Presskuchen selbst zugekauft, ergeben sich je nach Lieferquellen und Reinheit dieser Komponenten unterschiedliche Presskuchenqualitäten.

Aus ökologischen und ökonomischen Gründen versucht man, möglichst hochkonzentrierte Pulver- oder Flüssigpräparationen herzustellen. Bei diesen Marken sind der Anteil der biologisch nicht abbaubaren Dispergiermittel, die Fertigungskosten, die Transport- sowie die Lagerkosten bezogen auf den Farbstoff entsprechend geringer. Sie bieten somit Vorteile bei den Kosten bis hin zum Einsatz in den Färbereien und den Abwasserkosten dieser Färbereien.

Bei diesen hochkonzentrierten Einstellungen fallen die oben erwähnten Schwierigkeiten bei abweichenden Presskuchenqualitäten noch deutlicher ins Gewicht als bei weniger konzentrierten Marken.

Die Schwierigkeit bei der Herstellung von Pulverpräparationen, die aus C.I. Disperse Orange 30 bestehen bzw. es zum überwiegenden Teil enthalten, liegt zum einen darin, eine ausreichend hohe Dispersionsstabilität, zum anderen aber auch eine hohe Produktivität bei der Mahlung und insbesondere bei der Sprühtrocknung zu erzielen. Bei Flüssigpräparationen muss darüberhinaus eine ausreichend hohe Lagerstabilität gewährleistet sein.

Schwierigkeiten bei der Dispersionsstabilität lassen sich zurückführen auf den niedrigen Schmelzpunkt des Farbstoffs, der unterhalb der in der Praxis üblichen Färbe-bzw. Trocknereingangstemperaturen liegt. Dies führt zur Stippenbildung beim Färben und einem unerwünschten inhomogenen Ausfall der Färbung.

Besonders deutlich wird eine mangelnde Dispersionsstabilität beim Färbungen von Wickelkörpern, wie Kreuzspul- und Baumfärbungen, wo bei den praxisüblichen hohen Wickeldichten starke Filtrationseffekte auftreten. Die inneren Lagen eines solchen Wickelkörpers werden dabei entsprechend der Strömungsrichtung der Färbeflotte in einer anderen Farbtiefe angefärbt als die äußeren Lagen und die Farbstoffablagerungen führen zu einer schlechten, nicht akzeptablen Reibechtheit des Färbegutes.

Die Neigung zum Sintern bei der Mahlung des Presskuchens bzw. der C.I. Disperse Orange 30 enthaltenden Presskuchenmischungen macht es schwierig und mitunter unmöglich eine Feinverteilung des Mahlteiges zu erhalten, wie sie zur Sprühtrocknung erforderlich ist.

Eine ausreichend hohe Produktivität bei der Sprühtrocknung ist nur dann gegeben, wenn die Trocknereingangstemperatur hoch genug gewählt werden kann. Die Schwierigkeiten bei der Sprühtrocknung äußern sich darin, dass der Farbstoff bei diesem Fertigungsprozess sintert und agglomeriert oder gar verklebt und das dabei erhaltene Pulver sich im Färbebad nicht mehr homogen dispergieren lässt. Dies führt ebenfalls zu unerwünschtem inhomogenem Ausfall der Färbung.

Bei der Herstellung von Flüssigpräparationen ist C.I. Disperse Orange 30 problematisch und lässt sich nur schwer in eine ausreichend lagerstabile Form überführen. Lagerung bei Temperaturen, wie sie in tropischen Gebieten üblich sind über einen Zeitraum von mehreren Wochen oder Monaten führt dazu, dass der Farbstoff rekristallisiert und aus der Dispersion ausfällt. Beim Färben von Wickelkörpern, beim Färben von Gewebebahnen nach dem Thermosolverfahren sowie beim Stoffdruck führt dies wieder zu einem unegalen, inhomogenen und damit nicht akzeptablen Warenbild.

Aufgabe der vorliegenden Erfindung war es eine Lösung für die oben geschilderte Problematik zu finden und den Farbstoff C.I. Disperse Orange 30 sowie dessen feste und flüssige Präparationen in färbe-, Sprühtrocknungs- und lagerstabiler Form bereitzustellen.

Da bei kristallinen Substanzen Verunreinigungen den Schmelzpunkt erniedrigen, war es überraschend und für den Fachmann nicht vorhersehbar, dass der gezielte Zusatz von Farbstoffen der Formel (I) zu C.I. Disperse Orange 30 das Problem des Sinterns und Agglomerierens lösen kann und sich dadurch die oben erwähnten Probleme beseitigen lassen.

In EP-A 332 334 und in der DE 19 636 380 ist bereits beschrieben, dass durch Zumischen von bestimmten Azofarbstoffen zu C.I. Red 44 bzw. C.I. Red 82 ähnliche Probleme behoben werden können. Das Zumischen der dort genannten Farbstoffe zu C.I. Disperse Orange 30 löst die Probleme bei diesem Farbstoff allerdings nicht. Die in diesen EPA's genannten Mischfarbstoffe sind farbtonmäßig von Orange 30 auch zu weit entfernt. Mit ihnen lassen sich die gewünschten Farbtöne deshalb auch nicht einstellen. Auch durch Zumischen der in der GB 2 030 169 als Mischfarbstoffe beschriebenen Farrbstoffe mit sek. Propylresten in der Kupplungskomponente können die Probleme nicht gelöst werden.

Gegenstand der vorliegenden Erfindung sind Mischungen enthaltend C.I. Disperse Orange 30 und wenigstens einem Monoazo-Farbstoff der allgemeinen Formel (I) 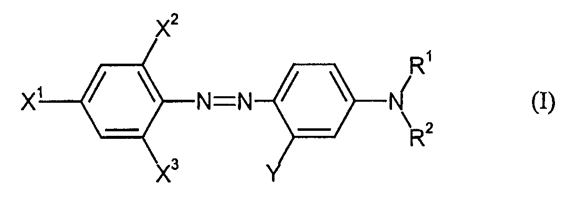 in der
- X¹: für Nitro, Cyano, Methyl- Ethyl- oder Phenylsulfonyl, gegebenenfalls substituiertes C₁-C₄ Alkoxycarbonyl, gegebenenfalls substituiertes C₁-C₄-Alkylaminosulfonyl, oder gegebenenfalls substituiertes mono- oder di- C₁-C₄-Alkylaminocarbonyl steht,
- X² und X³: unabhängig voneinander für Chlor, Brom oder Wasserstoff stehen
- Y: für Wasserstoff, Methyl oder Chlor steht
oder
- Y: für Acetamino, Propionylamino, n-Butyrylamino, i-Butyrylamino, Methoxyacetamino, Chlorethylamino, Methylsulfonylamino oder Ethylsulfonylamino steht, mit der Maßgabe, dass X² und X³ dann für Wasserstoff stehen,
und
- R¹ und R²: unabhängig voneinander für Methyl, Ethyl, n-Propyl, n-Butyl, 2-Hydroxyethyl, 2-Acetoxethyl, 2-Propionyloxethyl, 4-Acetoxybutyl, 4-Propionyloxybutyl, 2-Cyanethyl, 4-Hydroxybutyl, 4-Cyanobutyl, 2-Methoxy-, 2-Ethoxy-, 2-Propoxy- oder 2-Butoxyethyl, 4-Methoxy- oder 4-Ethoxybutyl, 2-Methoxy- oder Ethoxycarbonylethyl, 3-Methoxy oder Ethoxycarbonylpropyl, 2-Methoxy- oder Ethoxycarbonyloxethyl, 2-Methoxy- oder Ethoxycarbonyloxybutyl oder für Phenyl, Benzyl, 2-Phenethyl, 2-Phenoxyethyl oder Benzoyloxethyl stehen.

Als Substituenten für die gegebenenfalls substituierten Alkoxycarbonyl-, Alkylaminosulfonyl- und Mono- oder Dialkylaminocarbonylreste in der Bedeutung von X¹ kommen Methoxy, Ethoxy und Hydroxy in Frage.

Bevorzugt sind solche Farbstoffe (I), die im Farbton dem Farbstoff C.I. Disperse Orange 30 ähnlich sind.

Ein bevorzugter Substituent X¹ der Farbstoffe der Formel (I) ist Nitro.

Bevorzugte Substituenten X² und X³ sind Wasserstoff, Brom und insbesondere Chlor.

Bevorzugte Substituenten Y sind Chlor und insbesondere Wasserstoff.

Bevorzugte Substituenten R¹ und R² sind Methyl, Ethyl, 2-Hydroxyethyl, 2-Acetoxyethyl, 2-Propionyloxyethyl, 2-Benzoyloxyethyl, 2-Cyanoethyl, 2-Methoxyethyl, 2-Methoxycarbonylethyl, 2-Ethoxycarbonylethyl, 2-Phenyethyl oder Benzyl.

Besonders bevorzugte Reste R¹ und R² sind Ethyl, 2-Hydroxyethyl, 2-Acetoxethyl, 2-Benzoyloxethyl, 2-Cyanethyl oder Benzyl.

Bevorzugte Kombinationen von X² und X³ sind Cl/Br und Br/Br und H/H.

Eine besonders bevorzugte Kombination ist Cl/Cl.

Ganz besonders bevorzugt sind erfindungsgemäße Mischungen die wenigstens einen Farbstoff der Formel (I) enthalten worin die Substituenten X², X³ und Y folgende bevorzugte Kombinationen aufweisen: Cl/Cl/H, Cl/Cl/Cl, Cl/Br/H, Cl/Br/Cl, Br/Br/H, Br/Br/Cl oder H/H/H, und die übrigen Substituenten die oben angegebenen allgemeinen oder bevorzugten Bedeutungen haben.

Besonders bevorzugt sind dabei solche Kombinationen in denen Y für H steht.

Bevorzugt sind erfindungsgemäße Mischungen die wenigstens einen Farbstoff der Formel (I) enthalten, worin
- X¹: für Nitro steht
- X² und X³: unabhängig voneinander für Wasserstoff, Chlor oder Brom stehen,
- X: für Wasserstoff oder Chlor steht, und
- R¹ und R²: unabhängig voneinander für Methyl, Ethyl, 2-Hydroxyethyl, 2-Acetoxyethyl, 2-Propionyloxyethyl, 2-Benzoyloxyethyl, 2-Cyanoethyl, 2-Methoxyethyl, 2-Methoxycarbonylethyl, 2-Ethoxycarbonylethyl, 2-Phenyethyl oder Benzyl stehen.

Besonders bevorzugt sind erfindungsgemäße Mischungen, die wenigstens einen Farbstoff der Formel (I) enthalten, worin
- X¹: für Nitro seht,
- X² und X³: gleich sind und für Chlor, Brom oder Wasserstoff stehen
oder
- X² und X³: unabhängig voneinander für Chlor oder Brom stehen
- Y: für Wasserstoff oder Chlor steht, und
- R¹ und R²: unabhängig voneinander für Ethyl, 2-Hydroxyethyl, 2-Acetoxyethyl, 2-Benzoyloxethyl, 2-Cyanethyl oder Benzyl stehen.

Ganz besonders bevorzugt sind Farbstoffmischungen enthaltend den Farbstoff C.I. Disperse Orange 30 sowie einen Farbstoff der Formel (I), worin
- X¹: für Nitro,
- X² und X³: für Chlor,
- Y: für Wasserstoff und
- R¹ und R²: für 2-Cyanoethyl steht,
oder einen Farbstoff der Formel (I), worin
- X¹: für Nitro,
- X² und X³: für Chlor,
- Y: für Wasserstoff und
- R¹ und R²: für 2-Acetoxyethyl steht.

Beim Färben und Bedrucken dieser Fasermaterialien können neben der erfindungsgemäßen Mischung auch noch andersfarbige Farbstoffe eingesetzt werden, die sich mit den erfindungsgemäßen Farbstoffmischungen zu Farbtönen wie beispielsweise Schwarz, Braun oder Oliv ergänzen.

Die erfindungsgemäßen Farbstoffmischungen enthalten einer oder mehrere Farbstoffe der Formel (I), vorzugsweise 1 bis 3, und insbesondere 1 oder 2 Farbstoffe (I).

Der Gewichtsanteil der Farbstoffe bzw. des Farbstoffs der Formel (I) in der Mischung ist 0,5 bis 15 %, vorzugsweise 1 bis 10 % und besonders bevorzugt 2 bis 8 %.

Die erfindungsgemäßen Farbstoffmischungen können aber auch noch weitere Farbstoffe in beliebiger Menge, vorzugsweise bis zu 10 %, bezogen auf das Gesamtgewicht der erfindungsgemäßen Mischung enthalten.

Weiterhin können die erfindungsgemäßen Farbstoffinischungen Dispergiermittel, Netzmittel, Entschäumer, Entstaubungsmittel und weitere Hilfsmittel in den für diese Zusatzstoffe üblichen Mengen enthalten. Derartige Farbstoffinischungen werden im Folgenden als Farbstoffpräparationen bezeichnet und enthalten im allgemeinen
10-60 Gew.-% erfindungsgemäße Farbstoffmischung
10-80 Gew.-% anionisches Dispergiermittel
0 bis 15 Gew.-% nichtionogenes Dispergiermittel
und gegebenenfalls weitere Zusätze wie Netzmittel, Entschäumer, Entstaubungsmittel sowie weitere Hilfsmittel.

Die erfindungsgemäßen Mischungen können z.B. durch "gemischte Synthese" hergestellt werden. Dabei werden die Diazokomponenten des C.I. Disperse Orange 30 und des bzw. der Farbstoffe der allg. Formel (I) gemeinsam diazotiert und auf die Kupplungskomponenten des C.I. Disperse Orange 30 und des bzw. der Farbstoffe der allg. Formel (I) gekuppelt. Bevorzugt ist dieses Verfahren dann, wenn der bzw. die Farbstoffe der Formel (I) die gleiche Diazokomponente bzw. die gleiche Kupplungskomponente haben.

Bei der Herstellung der erfindungsgemäßen Farbstoffmischungen durch "gemeinsame Synthese" werden die Diazokomponente bzw. die Diazokomponenten in Mineralsäuren oder organischen Carbonsäuren, gegebenenfalls unter Wasserzusatz diazotiert. Organische Carbonsäuren sind beispielsweise Essigsäure oder Propionsäure. Mineralsäuren sind beispielsweise Phosphorsäure, Salzsäure und insbesondere Schwefelsäure.

Als nitrosierende Agentien werden Alkalinitrite, wie beispielsweise Natriurnnitrit in fester Form oder als wässrige Lösung, oder aber Nitrosylschwefelsäure, eingesetzt. Die Diazotiertemperatur liegt vorzugsweise bei -5 bis 30°C, insbesondere bei 0 bis 20°C.

Die Kupplung erfolgt im allgemeinen durch Zugabe der Diazolösung zur Lösung oder Suspension des Kupplers im Temperaturbereich bei 0 bis 35°C. Der pH-Wert des vorgelegten Kupplers ist vorzugsweise schwach sauer. Der Zusatz eines Puffers, wie beispielsweise Natriumacetat, kann vorteilhaft sein.

Es ist auch möglich, die Kupplung durchzuführen, indem man den Kuppler als schwach saure, beispielsweise essigsaure Lösung oder Suspension zur Diazolösung gibt. Auch hier kann der Zusatz eines Puffers vorteilhaft sein.

Zur Reduzierung der Filtrierzeit und der Erhöhung des Farbstoffgehaltes im Filterkuchen kann es vorteilhaft sein, den Farbstoff nach der Kupplung im Kupplungsansatz auf Temperaturen von 50 bis 130°C zu erwärmen. Zweckmäßigerweise wird auch hier der pH-Wert des Ansatzes eingestellt auf einen Wert von 4 bis 8.

Weiterhin können die erfindungsgemäßen Mischungen durch Vermischen der Farbstoffe (I) mit C.I. Disperse Orange hergestellt werden. So können die Farbstoffe der Formel (I) dem C.I. Disperse Orange 30 auch beim Finish zugesetzt werden, d.h. die Presskuchen der Farbstoffe werden gemeinsam gemahlen und dann gegebenenfalls sprühgetrocknet.

Es können allerdings auch die Mahlteige der getrennt aufgemahlenen Presskuchen vereinigt und dann gemeinsam sprühgetrocknet werden. Schließlich können einzeln formierte Farbstoffe aber auch durch Einrühren in Färbeflotten oder Druckpasten gemischt werden.

Unter dem Begriff "Finish" wird die Überführung eines in der Regel aus einem Syntheseverfahren gewonnenen Farbstoffes in eine für die jeweils vorgesehene Anwendung gebräuchliche Form verstanden. Insbesondere wird darunter die Nassmahlung des Farbstoffes in Gegenwart von Wasser, Dispergiermittel und gegebenenfalls weiterer Zusätze und gegebenenfalls anschließender Trocknung, insbesondere Sprühtrocknung, verstanden wodurch eine feste Farbstoffpräparation erhalten wird.

Das Mischen der Farbstoffe erfolgt zweckmäßigerweise in geeigneten Mühlen, beispielsweise Kugel- oder Sandmühlen. Zur Herstellung bzw. Verbesserung des Dispersionsgrades von Einzelfarbstoffen oder Mischungen wird der zu mahlenden Farbstoffmischung oder der Mischung aus der gemeinsamen Synthese vorzugsweise ein oder mehrere Dispergiermittel zugesetzt. Selbstverständlich kann die Teilchengröße der Farbstoffpartikel auch durch eine Mahlbehandlung z.B. Nassperlmahlung, sei es während der Synthese oder aber im unmittelbaren Anschluss daran, entsprechend beeinflusst und auf einen gewünschten Wert eingestellt werden. Auf diese Weise können die erfindungsgemäßen Farbstoffpräparationen hergestellt werden

Als Dispergiermittel zum Finish der erfindungsgemäßen Farbstoffmischungen kommen insbesondere anionische und/oder nichtionogene Dispergiermittel in Frage. Bevorzugt sind dabei die anionischen Dispergiermittel und besonders bevorzugt sind Mischungen aus anionischen und nichtionogenen Dispergiermitteln, in denen der Anteil an anionischen Dispergiermitteln überwiegt.

Geeignete anionische Dispergiermittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und Benzolsulfonsäuren, Kondensationsprodukte aus gegebenenfalls substituiertem Phenol mit Formaldehyd und Natriumbisulfit. Weiterhin kommen vor allem Ligninsulfonate in Betracht, z.B. solche, die nach dem Sulfit- oder Kraft-Verfahren gewonnen werden. Vorzugsweise handelt es sich um Produkte die zum Teil hydrolysiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1 000 und 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als nichtionische Dispergiermittel kommen beispielsweise in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, Carbonsäureamiden und Harzsäuren. Hierbei handelt es sich z.B. um Ethylenoxidaddukte aus der Klasse der Umsetzungsprodukte von Ethylenoxid mit:
a) gesättigten und/oder ungesättigten Fettalkoholen mit 6 bis 20 C-Atomen oder
b) Alkylphenolen mit 4 bis 12 C-Atomen im Alkylrest oder
c) gesättigten und/oder ungesättigten Fettaminen mit 14 bis 20 C-Atomen oder
d) gesättigten und/oder ungesättigten Fettsäuren mit 14 bis 20 C-Atomen oder
e) hydrierte und/oder unhydrierte Harzsäuren.

Als Ethylenoxid-Addukte kommen insbesondere die unter a) bis e) genannten alkylierbaren Verbindungen mit 5 bis 30 Mol Ethylenoxid in Frage.

Geeignete Netzmittel sind beispielsweise C₆-C₁₀-Alkyl-Phosphate oder Additionsprodukte aus C₆-C₁₈-Fettalkoholen und Ethylen- und/oder Propylenoxid oder Gemische solcher Alkoxylierungsprodukte.

Geeignete Entschäumer sind beispielsweise Tributylphosphat oder Tertiär-Acetylen-Glykol.

Geeignete Entstaubungsmittel sind beispielsweise solche auf Mineralölbasis.

Unter weiteren Hilfsmitteln werden beispielsweise Fungizide, wie z.B. Natrium-o-phenyl-phenolat oder Natriumchlorphenolat, Antrocknungsverhinderer sowie solche, die als Oxidationsmittel wirken, wie z.B. Natrium-m-nitrobenzolsulfonat, Frostschutzmittel oder Hydrophilierungsmittel usw. verstanden.

Bevorzugte feste Farbstoffpräparationen enthalten

| | |
|---|---|
| 10 bis 50 Gew.-% | erfindungsgemäße Farbstoffmischung |
| 10 bis 80 Gew.-% | Ligninsulfonate, insbesondere Kraft- und Sulfitlignine |
| 0 bis 20 Gew.-% | eines Kondensationsproduktes aus Naphthalinsulfonsäure und Formaldehyd, |
| 0 bis 10 Gew.-% | nichtionogenes Dispergiermittel, insbesondere Additionsprodukte von Harzsäuren und Ethylenoxid und/oder Propylenoxid, |
| 0 bis 1,5 Gew.-% | Netzmittel, |
| 0,1 bis 1 Gew.-% | Entschäumer, |
| 0,2 bis 1,5 Gew.-% | Entstaubungsmittel, |

jeweils bezogen auf die gesamte Präparation.

Bevorzugte flüssige Farbstoffpräparationen enthalten

| | |
|---|---|
| 10 bis 30 Gew.-% | erfindungsgemäße Farbstoffmischung |
| 10 bis 30 Gew.-% | Ligninsulfonate, insbesondere Kraft- und Sulfitlignine |
| 0 bis 10 Gew.-% | eines Kondensationsproduktes aus Naphthalinsulfonsäure und Formaldehyd, |
| 0 bis 10 Gew.-% | nichtionogenes Dispergiermittel, insbesondere Additionsprodukte von Harzsäuren und Ethylenoxid und/oder Propylenoxid, |
| 0,1 bis 1 Gew.-% | Entschäumer, |
| 0,1 bis 0,5 Gew.-% | Konservierungsmittel |
| 0 bis 15 Gew.-% | Kälteschutzmittel, insbesondere Glycerin und |
| 79,8 bis 10 Gew.-% | Wasser, |

jeweils bezogen auf die gesamte Präparation.

Als Konservierungsmittel kommen beispielsweise folgende in Frage: Isothiazolidone beispielsweise 1,2-Benzisothiazol-3-(2H)-on, Chlor-2-methyl-4-isothiazolin-3-on oder 2-Methyl-4-isothiazolin-3-on, Pentachlorphenolnatrium, 1,3,5-Triethylolhexahydro-s-triazin oder Gemische davon.

Für die meisten Anwendungsbereiche werden feste Präparationen (Pulver- bzw. Granulatpräparationen) bevorzugt.

Ein bevorzugtes Herstellungsverfahren für feste Farbstoffpräparationen besteht darin, dass den oben beschriebenen flüssigen Farbstoffdispersionen die Flüssigkeit, insbesondere das Wasser, entzogen wird, z.B. durch Vakuumtrocknung, Gefriertrocknung, durch Trocknung auf Walzentrocknern, vorzugsweise aber durch Sprühtrocknung.

Die Sprühtrocknung eines die erfindungsgemäße Farbstoffmischung enthaltenden Slurrys erfolgt vorzugsweise in üblichen Sprühtrocknern bei Trocknereingangstemperaturen von 130 bis 160°C, vorzugsweise von 140 bis 150°C und Austrittstemperaturen von 50 bis 80°C, vorzugsweise von 60 bis 70°C.

Bei der Herstellung der festen Farbstoffpräparationen, kann vor der Trocknung noch ein Entstaubungsmittel, vorzugsweise in einer Menge von 0,1 bis 1,5 Teilen, der zu versprühenden Suspension zugegeben werden.

Der bei der Pulverherstellung nach der Mahlung des Farbstoffs in Gegenwart der Dispergier- und Hilfsmittel anfallende Mahlteig ist auch bei erhöhter Temperatur und über längere Zeit stabil. Der Mahlteig in den Mühlen wie auch nach Verlassen der Mühlen braucht nicht gekühlt zu werden und lässt sich vor der Sprühtrocknung längere Zeit in Sammelbehältern lagern. Ein weiterer Vorteil ist der, dass die Sprühtrocknung bei hohen Temperaturen durchgeführt werden kann, ohne dass das zu trocknende Gut agglomeriert. Bei gleicher Trocknerausgangstemperatur bedeutet eine Erhöhung der Eingangstemperatur eine Erhöhung der Trocknerleistung und somit eine Erniedrigung der Fertigungskosten.

Die Flüssigpräparationen neigen nicht zur Phasentrennung und insbesondere nicht zur Sedimentation und kittigem Absetzen. Ein ebenfalls aufwendiges Homogenisieren des Farbstoffs im Gebinde vor der Farbstoffentnahme kann somit entfallen.

Die erfindungsgemäßen Farbstoffinischungen, insbesondere in Form ihrer festen Präparationen, benetzen beim Ansetzen von Färbe- und Klotzflotten sowie auch von Druckteigen besser als C.I. Disperse Orange 30 alleine und lassen sich rasch und ohne aufwendiges manuelles oder maschinelles Rühren dispergieren. Die Flotten und Druckteige sind homogen und lassen sich in modernen Farbküchen problemlos verarbeiten, ohne die Düsen der Dosierautomaten zu verstopfen.

Die Erfindung betrifft weiterhin die Verwendung der erfindungsgemäßen Farbstoffmischungen zum Färben und/oder Bedrucken von hydrophoben synthetischen Fasermaterialien oder deren Mischungen oder von Mischungen hydrophober synthetischer Fasermaterialien mit natürlichen Fasermaterialien.

Als hydrophobe synthetische Fasermaterialien kommen z.B. in Betracht: Celluloseester wie Cellulose-2½-acetat und Cellulosetriacetat, weiterhin Polyamide und Polyester, insbesondere hochmolekulare Polyester auf Basis von aromatischen Dicarbonsäuren und Glykolen, vorzugsweise Polyethylenglykolterephthalaten oder beliebige Mischungen der genannten Fasermaterialien. Als natürliche Fasermaterialien eignen sich Wolle und Cellulose und insbesondere Baumwolle.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein.

Insbesondere eignen sich die erfindungsgemäßen Farbstoffmischungen zum Färben und/oder Bedrucken von Textilien aus aromatischen Polyestern oder von Mischtextilien aus aromatischen Polyestern und Celluloseestern oder aus aromatischen Polyestem und Wolle oder Cellulose und insbesondere Baumwolle.

Das Färben des genannten Fasergutes mit den erfindungsgemäßen Farbstoffmischungen oder den festen oder flüssigen erfindungsgemäßen Farbstoffpräparationen erfolgt in an sich bekannter Weise, beispielsweise nach Art einer Spinnfärbung, vorzugsweise aber aus wässriger Dispersion, gegebenenfalls in Gegenwart von Carriern zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 180 bis 230°C fixiert wird.

Man erhält auf diese Weise sehr farbstarke orangefarbene Färbungen mit sehr guten Echtheitseigenschaften.

In den bei den obigen Applikationen eingesetzten Färbeflotten sollten die erfindungsgemäßen Präparationen der Farbstoffmischungen vorzugsweise in möglichst feiner Verteilung vorliegen. Die Feinverteilung der Farbstoffe wird dadurch gewährleistet, dass man die Farbstoffmischungen zusammen mit Dispergiermitteln in einem flüssigen Medium, vorzugsweise in Wasser, dispergiert und die Farbstoffmischung dabei der Einwirkung von Scherkräften aussetzt. Dabei werden die ursprünglich vorhandenen Farbstoffteilchen mechanisch soweit zerkleinert, dass eine optimale spezifische Oberfläche erreicht wird und die Sedimentation der Farbstoffe vermieden wird. Die Teilchengröße der Farbstoffe liegt im allgemeinen zwischen 0,1 und 5 µm, vorzugsweise zwischen 0,5 und 1 µm. Die bei dem Dispergiervorgang mitverwendeten Dispergiermittel können die bereits im Zusammenhang mit der Synthese und der Herstellung der Farbstoffmischung genannten nichtionischen oder anionischen Dispergiermittel sein.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, soweit verdünnt, dass sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Das Bedrucken der genannten Materialien kann in an sich bekannter Weise so durchgeführt werden, dass die erfindungsgemäßen Farbstoffmischungen in eine Druckpaste einverleibt werden und die damit bedruckte Ware zur Fixierung des Farbstoffs, gegebenenfalls in Gegenwart eines Carriers, bei Temperaturen zwischen 180 bis 230°C mit HT-Dampf oder Trockenhitze behandelt wird. Zur Herstellung der Druckpasten werden die erforderlichen Mengen der Farbstoffeinstellung zusammen mit Verdickungsmitteln, wie z.B. Alkali-Alginaten oder dgl., und gegebenenfalls weiteren Zusätzen, wie z.B. Fixierbeschleunigern, Netzmitteln und Oxidationsmitteln verknetet.

Man erhält auf diese Weise sehr farbstarke orangefarbene Drucke mit sehr guten Echtheiten, insbesondere mit sehr guten Licht-, Reib-, Thermofixier-, Wasch-, Wasser- und Thermomigrierechtheiten.

Die erfindungsgemäßen Farbstoffmischungen eignen sich auch zum Färben der vorstehend aufgeführten hydrophoben Materialien aus organischen Lösungsmitteln nach den hierbei bekannten Methoden und zum Färben in der Masse.

Die erfindungsgemäßen Farbstoffmischungen sind auch im Gemisch mit anderen Dispersionsfarbstoffen vorzüglich zum Färben und Bedrucken von hydrophoben synthetischen Materialien geeignet.

Die Überlegenheit der erfindungsgemäßen Farbstoffinischungen wird besonders deutlich beim Färben aus wässrigem Färbebad unter modernen Praxisbedingungen.

Die genannten modernen Praxisbedingungen sind gekennzeichnet durch hohe Wickeldichten bei Kreuzspul- und Baumfärbungen, kurze Flottenverhältnisse, also hohe Farbstoffkonzentrationen sowie hohe Scherkräfte in der Färbeflotte, bedingt durch hohe Pumpenleistungen. Auch unter diesen Bedingungen neigen die erfindungsgemäßen Farbstoffmischungen nicht zur Agglomeration, und es kommt nicht zu Abfiltrationen auf den zu färbenden Textilmaterialien. Es werden also homogene Färbungen ohne Farbstärkeunterschiede zwischen den äußeren und den inneren Lagen der Wickelkörper erhalten, und die Färbungen zeigen keinen Abrieb. Bei Klotzfärbungen und Drucken mit den erfindungsgemäßen Farbstoffmischungen schließlich wird ebenfalls ein homogenes, stippenfreies Warenbild erhalten.

Die Erfindung wird durch die folgenden Beispiele näher beschrieben, jedoch nicht eingeschränkt. In den Beispielen bedeuten Teile "Gewichtsteile" und Prozente "Gewichtsprozente", sofern nicht anders angegeben.

### Beispiel 1

a) 250 Teile Presskuchen des Farbstoffs C.I.Disperse Orange 30 und 12 Teile Presskuchen des Farbstoffs der allg. Formel ( I ), in der X¹ für Nitro X² und X³ für Chlor, Y für Wasserstoff und R¹ und R² für Cyanethyl stehen, jeweils mit einem Farbstoffgehalt von 35 %, werden mit 112 g eines Ligninsulfonates in einer Sandmühle bis zu einer Feinverteilung von 60 % kleiner als 1 my aufgemahlen. Der erhaltene Mahlteig wird in einem Sprühtrockner bei einer Eingangstemperatur von 140°C und einer Ausgangstemperatur von 60°C getrocknet. Man erhält so ein ca. 45%-iges Farbstoffpulver.
b) 0,2 g des Farbstoffpulvers aus Beispiel 1a) werden in 250 ml Wasser eingerührt. In die so erhaltene Färbeflotte werden 10 g eines Polyestergarnes, das auf einer Kreuzspule dicht gewickelt ist, bei 50°C eingebracht und unter Umpumpen der Färbeflotte von innen nach außen innerhalb von 20 min. auf 130°C erwärmt. Nach 30-minütigem Färben bei dieser Temperatur wird das Färbebad abgekühlt, und das auf der Kreuzspule gewickelte Garn gespült und getrocknet. Die Kreuzspule zeigt an ihrer Innenseite keine Ablagerungen und es lassen sich keine ausgefallenen, d.h. im Färbebad nicht vollständig dispergierten Farbstoffpartikel von ihrer Oberfläche abreiben. Wird das gefärbte Garn abgespult und zu einem Strumpf verstrickt, so sind die Enden dieses Strumpfes zueinander farbstärkegleich, d.h. das Garn auf der Kreuzspule war innen und außen homogen gefärbt.
c) Wird analog zu den Angaben in Beispiel 1a) ein ca. 45%-iges Farbstoffpulver nur mit C.I.Orange 30 hergestellt und entsprechend den Angaben des Beispiels 1b) gefärbt, so erhält man eine Kreuzspulfärbung mit deutlichen Farbstoffablagerungen, die sich leicht abreiben lassen. Ein aus dem Garn hergestellter Strumpf ist nicht endengleich, also inhomogen gefärbt.

### Beispiel 2

Wird in Analogie zu den Angaben des Beispiels la) ein 45%-iges Farbstoffpulver hergestellt, das bezogen auf den Reinfarbstoffanteil 92 % C.I. Orange 30 und 8 % eines Farbstoffs der Formel (I), in der X¹ für Nitro X² und X³ für Chlor, Y für Wasserstoff und R¹ und R² für Acetoxethyl bedeuten, enthält, so erhält man auch hiermit beim Färben von Garnen oder Gewebebahnen, die wie in der Praxis üblich, dicht gewickelt sind, einen homogenen Ausfall der Färbungen.

### Beispiel 3

a) 207 g 2.6-Dichlor-4-nitranilin werden in 300 ml konz. Schwefelsäure bei 20 bis 25°C mit 328g einer 40 %-igen Nitrosylschwefelsäure diazotiert und bei 0 bis 5°C unter direkter Eiskühlung auf eine Lösung von 223 g N-Cyanethyl-N-acetoxethylanilin und 10 g N.N-Bis-cyanethylanilin in 60 %-iger Essigsäure gekuppelt. Die nach beendeter Kupplung ausgefallene Farbstoffmischung wird filtriert, mit Wasser neutral gewaschen und trockengeblasen. Es wird ein ca. 25 %-iger wasserfeuchter Presskuchen erhalten, der bezogen auf den Reinfarbstoffgehalt ca. 95 % C.I.Orange 30 und ca. 5 % des Farbstoffs der Formel (I), in der X¹ für Nitro X² und X³ für Chlor, Y für Wasserstoff und R¹ und R² für Cyanethyl bedeuten, enthält.
b) Wird aus der so erhaltenen Farbstoffmischung entsprechend den Angaben des Beispiels 1a) ein 45 %-iges Farbstoffpulver hergestellt, so ergibt auch dieses einwandfreie, egale Färbeergebnisse.
c) Werden 100 g des wasserfeuchten Presskuchens des Beispiels 3a) mit 25 g eines Ligninsulfonates in einer Perlmühle bis zu einer Feinverteilung von 60 % kleiner 1 my gemahlen, so erhält man eine 20 %-ige Flüssigeinstellung dieser Farbstoffmischung, mit einwandfreier Lagerstabilität. Wird diese Flüssigeinstellung bei 50°C mehrer Monate gelagert, so zeigen sich bei den praxisüblichen Filtertests keine Ablagerungen auf den Filtern und beim Färben nach dem Thermosolverfahren sowie beim Drucken keine Stippen auf dem gefärbten bzw. bedruckten Gewebe. D.h. beim Lagern dieser Flüssigpräparation ist die Dispersion stabil geblieben und es ist nicht zur Rekristallisation unter Ausfällung der dispergierten Farbstoffteilchen gekommen.

## Patentansprüche

1. Farbstoffmischungen enthaltend C.I. Disperse Orange 30 und wenigstens einen Monoazo-Farbstoff der allgemeinen Formel (I) 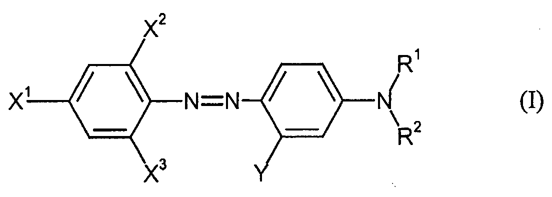 worin
X¹ für Nitro, Cyano, Methyl- Ethyl- oder Phenylsulfonyl, gegebenenfalls substituiertes C₁-C₄ Alkoxycarbonyl, gegebenenfalls substituiertes C₁-C₄-Alkylaminosulfonyl, oder gegebenenfalls substituiertes mono- oder di- C₁-C₄-Alkylaminocarbonyl steht,
X² und X³ unabhängig voneinander für Chlor, Brom oder Wasserstoff stehen
Y für Wasserstoff, Methyl oder Chlor steht
oder
Y für Acetamino, Propionylamino, n-Butyrylamino, i-Butyrylamino, Methoxyacetamino, Chlorethylamino, Methylsulfonylamino oder Ethylsulfonylamino steht, mit der Maßgabe, dass X² und X³ dann für Wasserstoff stehen,
R¹ und R² unabhängig voneinander für Methyl, Ethyl, n-Propyl, n-Butyl, 2-Hydroxyethyl, 2-Acetoxethyl, 2-Propionyloxethyl, 4-Acetoxybutyl, 4-Propionyloxybutyl, 2-Cyanethyl, 4-Hydroxybutyl, 4-Cyanobutyl, 2-Methoxy-, 2-Ethoxy-, 2-Propoxy- oder 2-Butoxyethyl, 4-Methoxy-oder 4-Ethoxybutyl, 2-Methoxy- oder Ethoxycarbonylethyl, 3-Methoxy oder Ethoxycarbonylpropyl, 2-Methoxy- oder Ethoxycarbonyloxethyl, 2-Methoxy- oder Ethoxycarbonyloxybutyl oder für Phenyl, Benzyl, 2-Phenethyl, 2-Phenoxyethyl oder Benzoyloxethyl stehen.

2. Farbstoffmischungen gemäß Anspruch 1, dadurch gekennzeichnet, dass die Anzahl der Farbstoffe der allg. Formel ( I ) in der Mischung 1 bis 3 ist.

3. Farbstoffmischungen gemäß wenigstens einem der Ansprüche 1 oder 2, dadurch gekennzeichnet, dass der Anteil der Farbstoffe der allgemeinen Formel (I) in der Mischung 0,5 bis 15 Gew.-% beträgt.

4. Verfahren zur Herstellung der Farbstoffmischungen gemäß wenigstens einem der Ansprüche 1 bis 3, dadurch gekennzeichnet, dass die Presskuchen der Mischungskomponenten gemischt und gemeinsam gemahlen werden, oder die Mischungskomponenten separat gemahlen und anschließend gemischt werden und gegebenenfalls anschließend gemeinsam sprühgetrocknet werden.

5. Verfahren zur Herstellung der Farbstoffmischung gemäß wenigstens einem der Ansprüche 1 bis 3, dadurch gekennzeichnet, dass die Diazokomponenten von C.I. Disperse Orange 30 und wenigstens eines Farbstoffs der allgemeinen Formel (I) gemeinsam diazotiert und auf die Kupplungskomponenten von C.I. Disperse Orange 30 und wenigstens eines Farbstoffs der allgemeinen Formel ( I ) gekuppelt werden.

6. Farbstoffpräparation enthaltend
| | |
|---|---|
| 10-60 Gew.-% | Farbstoffmischung gemäß Anspruch 1 |
| 10-80 Gew.-% | anionisches Dispergiermittel |
| 0 bis 15 Gew.-% | nichtionogenes Dispergiermittel |
| | |
| | sowie gegebenenfalls weitere Zusätze wie Netzmittel, Entschäumer, Entstaubungsmittel und weitere Hilfsmittel. |

7. Feste Farbstoffpräparation enthaltend
| | |
|---|---|
| 10 bis 50 Gew.-% | Farbstoffmischung gemäß Anspruch 1 |
| 10 bis 80 Gew.-% | Ligninsulfonate, insbesondere Kraft- und Sulfitlignine |
| 0 bis 20 Gew.-% | eines Kondensationsproduktes aus Naphthalinsulfonsäure und Formaldehyd, |
| 0 bis 10 Gew.-% | nichtionogenes Dispergiermittel, insbesondere Additionsprodukte von Harzsäuren und Ethylenoxid und/oder Propylenoxid, |
| 0 bis 1,5 Gew.-% | Netzmittel, |
| 0,1 bis 1 Gew.-% | Entschäumer, |
| 0,2 bis 1,5 Gew.-% | Entstaubungsmittel, |
jeweils bezogen auf die gesamte Präparation.

8. Flüssige Farbstoffpräparation enthaltend
| | |
|---|---|
| 10 bis 30 Gew.-% | Farbstoffmischung gemäß Anspruch 1 |
| 10 bis 30 Gew.-% | Ligninsulfonate, insbesondere Kraft- und Sulfitlignine |
| 0 bis 10 Gew.-% | eines Kondensationsproduktes aus Naphthalinsulfonsäure und Formaldehyd, |
| 0 bis 10 Gew.-% | nichtionogenes Dispergiermittel, insbesondere Additionsprodukte von Harzsäuren und Ethylenoxid und/oder Propylenoxid, |
| 0,1 bis 1 Gew.-% | Entschäumer, |
| 0,1 bis 0,5 Gew.-% | Konservierungsmittel |
| 0 bis 15 Gew.-% | Kälteschutzmittel, insbesondere Glycerin und |
| 79,8 bis 10 Gew.-% | Wasser, |
jeweils bezogen auf die gesamte Präparation.

9. Verwendung der Farbstoffmischungen gemäß wenigstens einem der Ansprüche 1 bis 3 oder der Farbstoffpräparation gemäß wenigstens einem der Ansprüche 6 bis 8 zum Färben und/oder Bedrucken von hydrophoben synthetischen Fasermaterialien oder deren Mischungen oder von Mischungen hydrophober synthetischer Fasermaterialien mit natürlichen Fasermaterialien.

10. Verwendung der Farbstoffmischungen gemäß wenigstens einem der Ansprüche 1 bis 3 oder der Farbstoffpräparationen gemäß wenigstens einem der Ansprüche 6 bis 8 zum Färben und/oder Bedrucken von Textilien aus aromatischen Polyestern oder von Mischtextilien aus aromatischen Polyestern mit Celluloseestem oder Wolle.
